# EUROPEAN PATENT APPLICATION

(11) **EP 4 283 590 A1**
(43) Date of publication of application: **29.11.2023**
(21) Application number: 23168931.6
(22) Date of filing: 20.04.2023
(51) Int. Cl.: G08G 1/00

(54) **COMMUNICATION DEVICE, COMMUNICATION CONTROL METHOD, AND STORAGE MEDIUM**

(30) Priority: 24.05.2022 JP 2022084426
(71) Applicant: CANON KABUSHIKI KAISHA, Tokyo 146-8501 (JP)
(72) Inventor: URANO, Yuta, Ohta-ku, 146-8501 (JP)
(74) Representative: TBK

(57) **Abstract**

A communication device capable of communicating with an external device in accordance with states of an operator and a movable apparatus includes: a riding determination unit configured to determine whether an operator is riding a movable apparatus; and a communication unit configured to transmit a message including attribute information indicating the movable apparatus to another device when the riding determination unit determines that the operator is in a first state in which the operator is riding the movable apparatus, and to transmit a message including attribute information indicating a pedestrian to the other device when the riding determination unit determines that the operator is in a second state in which the operator is not riding the movable apparatus and is operating the movable apparatus.

## Description

### BACKGROUND OF THE INVENTION

### Field of the Invention

The present invention relates to a communication device, a communication control method, and a storage medium.

### Description of the Related Art

In recent years, to implement smart mobility societies, vehicle-to-everything (V2X) technologies have been standardized as generic technologies for connection or mutual cooperation between automobiles and automobiles, pedestrians, infrastructures, networks, or the like.

For example, the European Telecommunications Standards Institute (ETSI) standardizes messages transmitted from terminals carried by automobiles, pedestrians, bicycle or motorcycle passengers, or the like to other terminals. In the future, safer and securer systems are expected to be constructed by mutually communicating information regarding not only automobiles but also pedestrians or bicycle or motorcycle passengers.

Japanese Patent Application Laid-open No. 2021-51799 discloses a system that determines whether a passenger of a two-wheeled vehicle is wearing a helmet and notifies a guardian whether the passenger wears the helmet.

However, in V2X systems, people walking and pushing bicycles or motorcycle may be treated as the "bicycles" or the "motorcycles" and erroneous notifications or the like of warnings may occur. For example, regardless of walking and pushing on the sidewalks, erroneous notifications such as violation notifications of sidewalk passage to bicycle or motorcycle users or avoidance notifications to other users may occur. In Japanese Patent Application Laid-open No. 2021-51799, however, walking and pushing or the like are not taken into consideration.

### SUMMARY OF THE INVENTION

According to an aspect of the present invention, a communication device includes at least one processor or circuit configured to function as: a riding determination unit configured to determine whether an operator is riding a movable apparatus; and a communication unit configured to transmit a message including attribute information indicating the movable apparatus to another device when the riding determination unit determines that the operator is in a first state in which the operator is riding the movable apparatus, and to transmit a message including attribute information indicating a pedestrian to the other device when the riding determination unit determines that the operator is in a second state in which the operator is not riding the movable apparatus and is operating the movable apparatus.

Further features of the present invention will become apparent from the following description of embodiments with reference to the attached drawings.

### BRIEF DESCRIPTION OF THE DRAWINGS

Fig. 1 is a functional block diagram illustrating a configuration of a V2X system according to a first embodiment of the present invention.
Figs. 2A and 2B are diagrams illustrating the time of riding of a two-wheeled vehicle and the time of walking and pushing of the two-wheeled vehicle on foot.
Figs. 3A, 3B, and 3C are flowcharts illustrating characteristic processing examples according to the first embodiment.
Fig. 4 is a functional block diagram illustrating a configuration of a V2X system according to a second embodiment of the present invention.
Figs. 5A and 5B are diagrams illustrating an example in which a riding state is determined based on images acquired from an imaging unit according to the second embodiment.
Fig. 6 is a diagram illustrating an example of a data structure with a format of ETSI VAM used in the first and second embodiments.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### First Embodiment

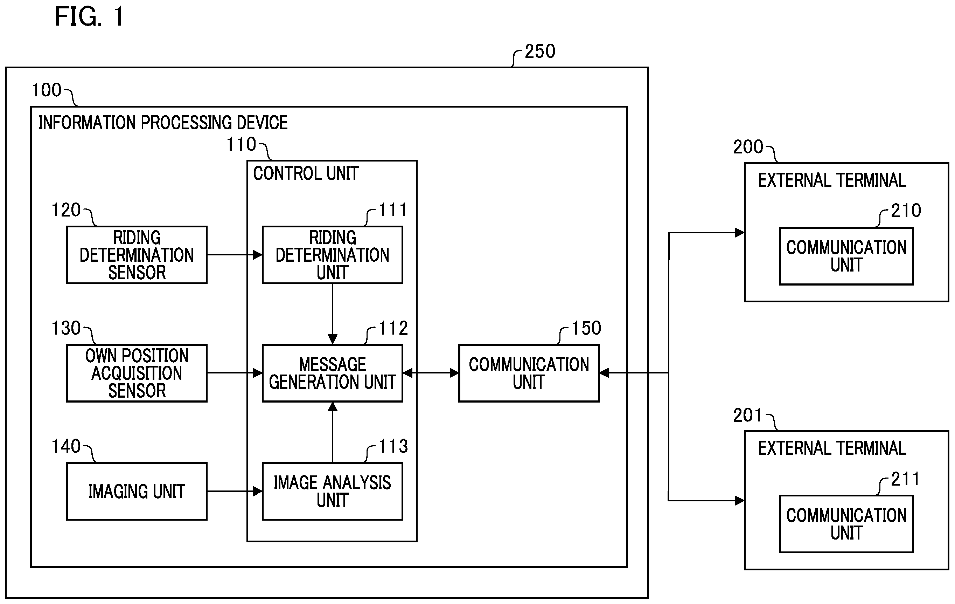

Fig. 1 is a functional block diagram illustrating a configuration of a V2X system according to a first embodiment of the present invention. Reference numeral 100 denotes a information processing device mounted on a two-wheeled vehicle 250 which is a mobile apparatus and reference numerals 200 and 201 denote external terminals.

The external terminals 200 and 201 may be terminals such as smartphones carried by different pedestrians or may be display devices mounted on different automobiles or the like. Alternatively, the external terminals may be displayed devices or the like mounted on the two-wheeled vehicle 250 itself. The two-wheeled vehicle 250 in the first embodiment may be a vehicle that includes a driving unit such as a motor or an engine or may not include the driving unit.

Some of functional blocks illustrated in Fig. 1 are implemented by causing a computer (not illustrated) included in a control unit 110 to execute a computer program stored in a memory which is a storage medium (not illustrated). However, some or all of the functional blocks may be implemented by hardware. As the hardware, a dedicated circuit (an ASIC), a processor (a reconfigurable processor or a DSP), or the like can be used.

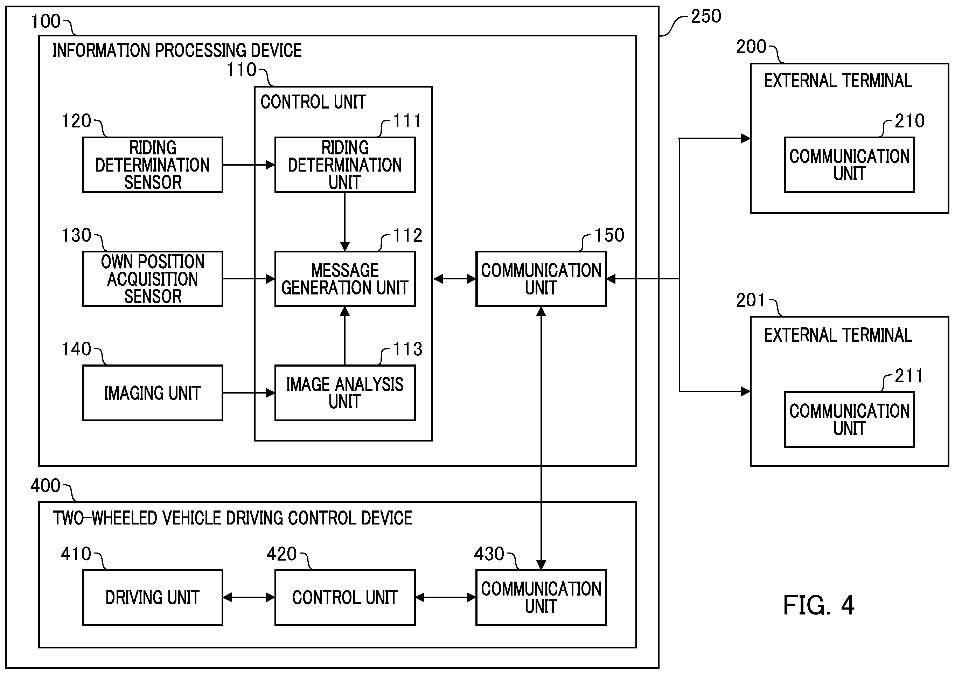

The functional blocks illustrated in Fig. 1 may not be contained in the same casing or may be configured by separate devices connected to each other via signal lines. The foregoing description in Fig. 1 is similarly true for Fig. 4 to be described below.

The information processing device 100 includes the control unit 110, a riding determination sensor 120, an own position acquisition sensor 130, an imaging unit 140, and a communication unit 150 and functions as a communication device that transmits a message indicating a state of a movable apparatus to another device.

The control unit 110 includes a central processing unit (CPU) or a graphics processing unit (GPU) serving as a computer and includes a riding determination unit 111, a message generation unit 112, and an image analysis unit 113.

Based on a sensor value obtained from the riding determination sensor 120 to be described below, the riding determination unit 111 determines whether an operator (a user) of the two-wheeled vehicle 250 which is a movable apparatus is riding the two-wheeled vehicle 250 or is walking and pushing. That is, the riding determination unit 111 determines whether the operator is riding the movable apparatus.

The message generation unit 112 generates a message including information regarding the two-wheeled vehicle 250 to transmit the message to an external terminal. A format of the message may be a format in conformity with a standard specification or may be a unique format. In the first embodiment, a case where a message called a VRU awareness message (VAM) standardized in ETSI is used will be described.

The VAM has a message format (see ETSI TS 103 300-3 V2.1.1) including information regarding an attribute, a position, and a speed of the two-wheeled vehicle 250 in order the safety of vulnerable road users (VRU) and the operator (the user) of the two-wheeled vehicle 250 or surrounding traffic participants.

The VRU transmits and receives messages with the format called the VAM to and from an external terminal. As described above, the VAM is merely exemplary and the first embodiment can also be applied to a message with another format.

The image analysis unit 113 acquires various types of information by analyzing images captured by the imaging unit 140. For example, positional information of a traveling lane or neighboring objects of the two-wheeled vehicle 250 can be acquired. Analysis results may be used to notify the operator (the user) of the two-wheeled vehicle 250 of the analysis results, for example, through an output unit (not illustrated) such as an audio device mounted on the two-wheeled vehicle 250 in addition to message delivery performed using the VAM described in the first embodiment.

The riding determination sensor 120 is configured with a speed sensor, an acceleration sensor, or an inertial measurement unit (IMU) acquiring an acceleration of the two-wheeled vehicle 250, or a gravimetric sensor acquiring a weight of a passenger.

The own position acquisition sensor 130 is configured with, for example, a global navigation satellite system (GNSS) sensor and acquires positional information of the two-wheeled vehicle 250. Accuracy of the positional information may be improved by combining acceleration information obtained from the riding determination sensor 120 or image information or the like acquired from the imaging unit 140 and using a simultaneous localization and mapping (SLAM) technology or the like which is a known technology.

The imaging unit 140 is an imaging device used to ascertain a status around the two-wheeled vehicle 250 and may be any imaging device such as a color camera, an infrared (IR) camera, or a stereo camera. As long as the status around the two-wheeled vehicle 250 can be ascertained, a ranging device such as a laser imaging detection and ranging (LiDAR) sensor may be used.

The communication unit 150 is a network I/F communicating with the external terminals 200 and 201. Communication connection to the external terminals may be wired connection, but is preferably wireless connection in terms of system features. The external terminals 200 and 201 include communication units 210 and 211, respectively. Each terminal transmits and receives messages through the communication unit. In Fig. 1, two external terminals are exemplified, but the number of external terminals is not limited to two.

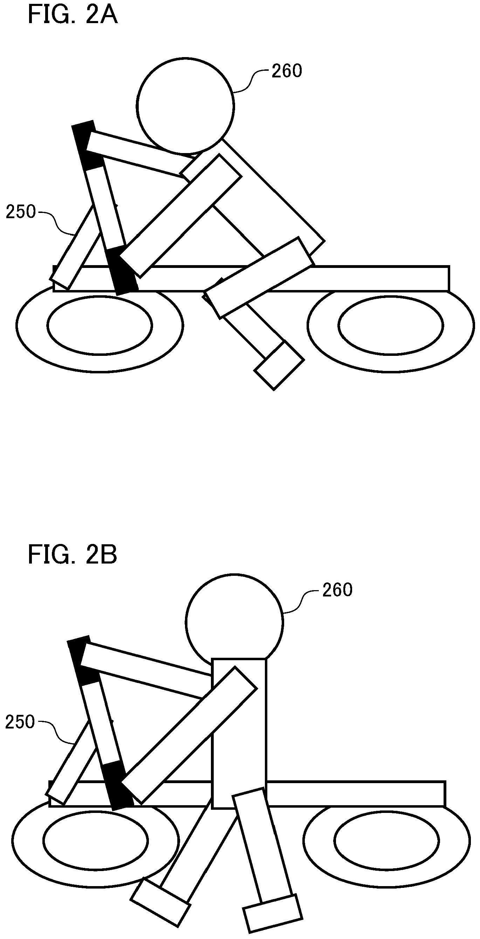

Figs. 2A and 2B are diagrams illustrating the time of riding of a two-wheeled vehicle and the time of walking and pushing of the two-wheeled vehicle. Fig. 2A is a diagram illustrating a state where an operator (a user) 260 is riding the two-wheeled vehicle 250 and Fig. 2B is a diagram illustrating a state where the operator (the user) 260 having gotten off the two-wheeled vehicle 250 is walking and pushing the two-wheeled vehicle 250 on foot (a push-walking state).

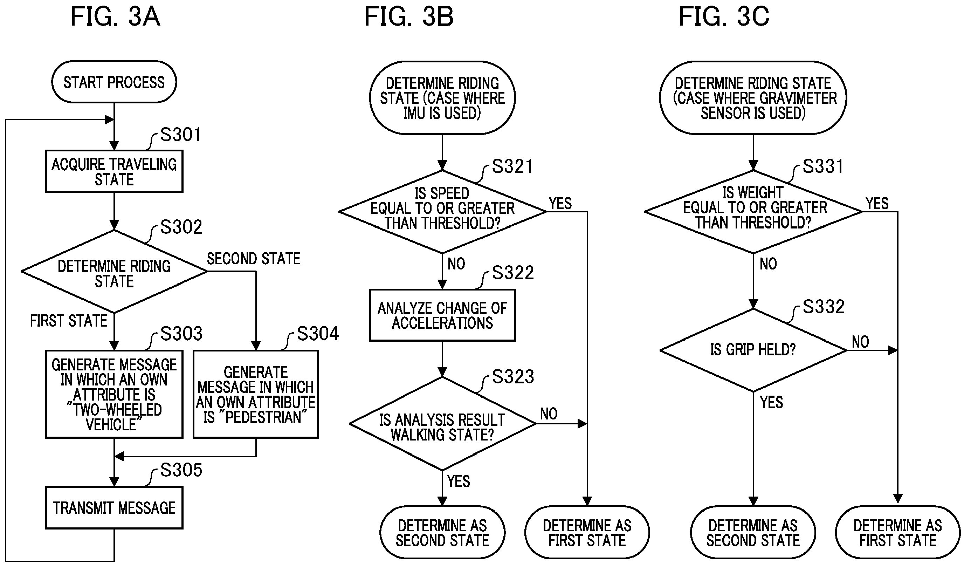

Figs. 3A, 3B, and 3C are flowcharts illustrating characteristic processing examples according to the first embodiment. Exemplary operations of the control unit 110 according to the first embodiment will be described with reference to Figs. 3A, 3B, and 3C. A CPU serving as a computer in the control unit 110 executes a computer program stored in a memory (not illustrated) to perform an operation of each step of the flowcharts of Figs. 3A, 3B, and 3C.

In the flow of Fig. 3A, the control unit 110 starts a process, for example, when the information processing device 100 is powered on. When the information processing device 100 is powered off, that is, for example, a bicycle is parked, the control unit 110 does not perform a process. Therefore, a message is not delivered to the outside.

In step S301, the control unit 110 acquires a traveling state of the two-wheeled vehicle 250 using various sensors. The acquired traveling state is used for the information processing device 100 to determine a riding state in step S302 and is also used to transmit a message communicating with another terminal.

In step S302 (a riding determination step), the riding determination unit 111 of the information processing device 100 determines whether the operator is a first state where the operator is riding the two-wheeled vehicle 250 or a second state where the operator is walking and pushing the two-wheeled vehicle 250 on foot in accordance with the traveling state acquired in step S301.

In the first embodiment, the second state is assumed to be a state where the operator is operating a movable apparatus (for example, pushing, moving, or supporting the movable apparatus) without riding the movable apparatus. This state is differentiated from a third state where the operator is not riding the movable apparatus and is not operating the movable apparatus.

The third state is, for example, a state where a movable apparatus and an operator are away from each other. In the first embodiment, an external device is notified as a "pedestrian" of the two-wheeled vehicle 250 which is a movable apparatus in the second state. On the other hand, in the first and third states, an external device is notified as a "two-wheeled vehicle" of the two-wheeled vehicle 250 which is a movable apparatus. Accordingly, the third state is treated as the first state for convenience.

Determination methods will be described with reference to the flowcharts of Figs. 3B and 3C. Fig. 3B is a flowchart illustrating a case where an IMU is used to determine a riding state in step S302 and Fig. 3C is a flowchart illustrating a case where a gravimeter sensor is used to determine a riding state in step S302.

In step S321 of Fig. 3B, the riding determination unit 111 of the information processing device 100 compares a speed of the two-wheeled vehicle 250 acquired from the riding determination sensor 120 such as an IMU with a predetermined threshold, for example.

Any value can be set as the threshold. The threshold is, for example, 8 km/h faster than a general walking speed. In step S321, the riding determination unit 111 of the information processing device 100 determines that the operator (the user) is in the first state where the operator is riding when the acquired speed of the two-wheeled vehicle 250 is equal to or greater than the threshold. That is, in step S321, when the speed of the moving apparatus is equal to or greater than a predetermined value, the operator is determined to be in the first state.

Conversely, when the riding determination unit 111 of the information processing device 100 determines, in step S321, that the speed of the two-wheeled vehicle 250 is less than the threshold, changes of accelerations on the X, Y, and Z axes acquired from the riding determination sensor 120 are analyzed in step S322, for example. Accordingly, it is determined whether the operator is in the second state where the operator is walking and pushing. That is, in step S322, based on an analysis result of the accelerations of the movable apparatus, it is determined whether the operator is in the second state.

That is, it is determined whether a specific acceleration is changed when the operator is stepping firmly on the ground at the time of walking. In this analysis, machine learning may be used. In step S323, the riding determination unit 111 of the information processing device 100 finally determines whether a passenger is in the second state where the passenger is walking and pushing based on the analysis result.

In the case of No in step S323, that is, when the operator 260 is in the third state where the operator 260 is not riding the two-wheeled vehicle 250 and is not operating the two-wheeled vehicle 250, the third state is treated equally as the first state. Therefore, the operator is determined to be in the first state for convenience.

When the riding state is determined in step S302, as in the flowchart of Fig. 3C, for example, a gravimeter sensor may be used as a part of the riding determination sensor 120. That is, for example, a gravimeter sensor may be provided in a saddle of a two-wheeled vehicle to determine the riding state.

In step S331, the riding determination unit 111 of the information processing device 100 determines that the operator is riding when an acquired weight value is equal to or greater than a predetermined threshold. That is, when the weight value acquired from the gravimeter sensor provided in the movable apparatus is equal to or greater than the predetermined threshold, it is determined that the operator is in the first state. When the weight value is less than the threshold, the process moves to step S332.

In step S332, it is determined whether the operator holds a grip of the two-wheeled vehicle 250. In the case of Yes, the operator is determined to be in the second state. In the case of No, the operator is determined to be in the third state, but is determined to be in the first state for convenience.

### Second Embodiment

Fig. 4 is a functional block diagram illustrating a configuration of a V2X system according to a second embodiment of the present invention. In the second embodiment, as illustrated in Fig. 4, the information processing device 100 is configured to be able to directly communicate with a two-wheeled vehicle driving control device 400. That is, whether an operator is in the first or second state is determined in accordance with information regarding a driving state of a movable apparatus received from the movable apparatus.

In Fig. 4, reference numeral 410 denotes a driving unit such as a motor or an engine of a two-wheeled vehicle, reference numeral 420 denotes a control unit that controls a motor or an engine, and reference numeral 430 denotes a communication unit that transmits driving information to an external device. The communication may be performed using a wired LAN or a wireless LAN or the communication may be performed via an internal bus on the assumption that the information processing device 100 and the two-wheeled vehicle driving control device 400 are the same device.

In the second embodiment, the riding determination unit 111 of the information processing device 100 receives a driving state of the two-wheeled vehicle 250 via the communication unit 430 and may determine whether a driver is riding the two-wheeled vehicle 250 in accordance with the driving state. That is, for example, when the driving state of the two-wheeled vehicle 250 is an idling state, it may be determined that the operator is not riding the two-wheeled vehicle 250. When a rotational speed in the driving unit is higher than in the idling state, it may be determined that the operator is riding the two-wheeled vehicle 250.

Alternatively, in the information processing device 100, the imaging unit 140 may be provided at a position at which an operator (a user) can be imaged, and the image analysis unit 113 may determine whether the operator (the user) is riding or not riding the two-wheeled vehicle in accordance with a position of the face or the body of the operator (the user).

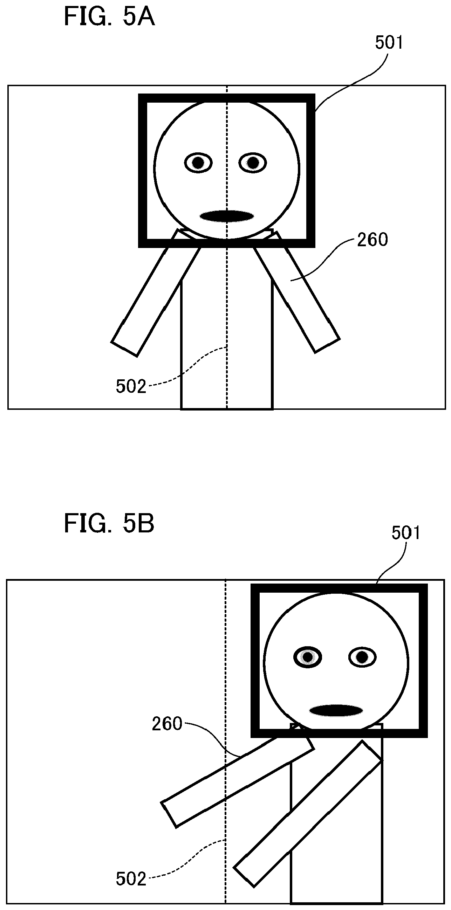

Figs. 5A and 5B are diagrams illustrating an example in which a riding state is determined based on images acquired from an imaging unit according to the second embodiment. Fig. 5A is a diagram illustrating an example in which a middle portion of an angle of field of the imaging unit 140 in the horizonal direction is installed to match a saddle position of the two-wheeled vehicle 250, for example.

At this time, when the operator (the user) 260 is in the first state where the operator is riding the two-wheeled vehicle 250, the face or the body of the operator (the user) 260 is set to be near a middle portion of the angle of field in the vertical direction. Reference numeral 261 denotes a face region detected by the image analysis unit 113. Reference numeral 502 denotes a middle of the angle of imaging field in the horizontal direction.

Conversely, as illustrated in Fig. 5B, when the operator is walking and pushing the two-wheeled vehicle 250 on foot (the second state), the face or the body of the operator (the user) 260 is located at a position deviating to the right or left from the middle of the angle of imaging field in the horizontal direction. In the second embodiment, since the operator 260 is standing near the two-wheeled vehicle 250 in the state of Fig. 5B, the operator is considered to be in the second state where the operator is operating (push-walking) the two-wheeled vehicle 250.

That is, in Figs. 5A and 5B, it is determined whether the operator is in the first or second state based on a position of a face region or a body region of the operator imaged by the imaging unit. In this way, the image analysis unit 113 may detect the position of the face or the body of the operator (the user) 260 and may determine whether the driver is in the first state where the driver is riding the two-wheeled vehicle or in the second state where the driver is not riding and is operating the movable apparatus in accordance with whether the position is located in a specific region.

Referring back to Fig. 3A, in step S302, the riding determination unit 111 determines that the operator is in the first state where the operator is riding, the information processing device 100 generates a message in which an own attribute is a "two-wheeled vehicle" in step S303. In step S305 (a communication step), the communication unit 150 transmits the message with the format of the VAM to the external terminal. That is, a message including attribute information indicating the movable apparatus is transmitted to another device.

Conversely, when it is determined in step S302 that the operator is in the second state (push-walking) where the operator is not riding and is operating the movable apparatus, the information processing device 100 generates a message in which an own attribute is a "pedestrian" in step S304. In step S305 (a communication step), the communication unit 150 transmits the message with the format of the VAM to the external terminal. That is, a message including attribute information indicating a pedestrian is transmitted to another device.

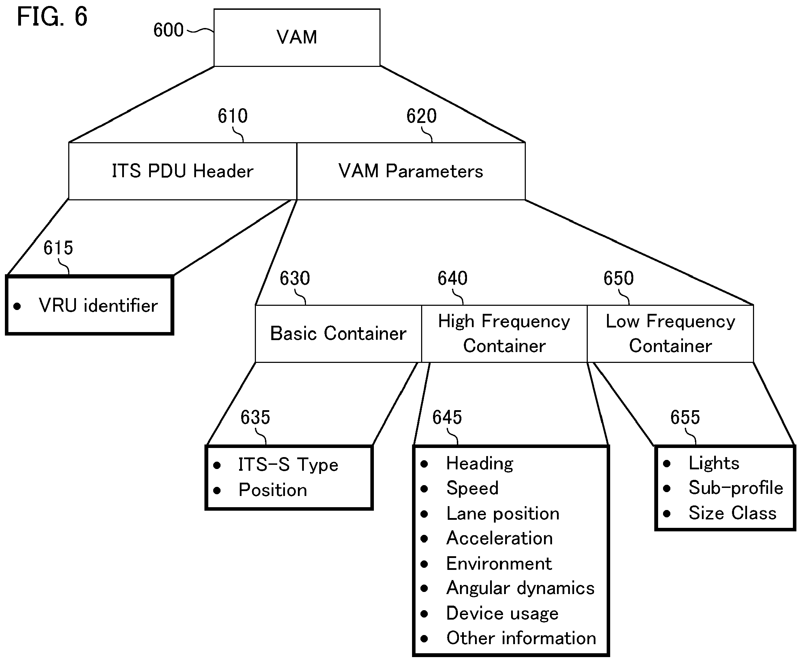

Next, the format of the ETSI VAM used at the time of transmission of a message to the outside will be described with reference to Fig. 6 in the second embodiment. Fig. 6 is a diagram illustrating an example of a data structure with a format of ETSI VAM used in the first and second embodiments. As illustrated in Fig. 6, a VAM 600 has data regions such as an ITS PDU header 610 which is a header and VAM parameters 620 for describing parameters.

In the ITS PDU header 610, a VRU identifier 615 which is an identifier indicating that a type of message to be transmitted is a VAM is described. It is determined whether the received message is the VAM by confirming the header region 610 of the message after an external terminal receives the message of the VAM.

The VAM parameters 620 are data regions where specific parameters of the VAM are described. The VAM parameters 620 include three containers, Basic Container 630, High Frequency Container 640, and Low Frequency Container 650, as data storage portions.

Basic Container 630 is a data region including basic information regarding vulnerable road users (VRU) in the VAM. In the second embodiment, ITS-S Type which is data indicating types of two-wheeled vehicle 250 and Position which is data indicating positional information of the two-wheeled vehicle 250 are included as indicated by reference numeral 635 of Fig. 6.

ITS-S Type which is data indicating types has, for example, types of Pedestrian (a pedestrian), a bicyclist (a person riding a bicycle), Motorcyclist (a person riding a motorcycle), and Animals (animals).

ITS-S Type which is data indicating types indicates broad classification of attributes of transmission sources of the VAM. The ITS-S Type is identical to Sub-Profile to be described below. Position which is data indicating positional information of the two-wheeled vehicle 250 may be generated from a sensor acquired from the own position acquisition sensor 130 included in the information processing device 100 of the two-wheeled vehicle 250.

High Frequency Container 640 which is a data storage portion is a set of information to be delivered to the neighborhood at a high frequency and includes, for example, the following information denoted by reference numeral 645 of Fig. 6. Here, all the following information is not essential and delivery or non-delivery may be selected in accordance with a situation.
- Heading (traveling direction)
- Speed (traveling speed)
- Lane position (traveling lane position)
- Acceleration (acceleration information)
- Environment (traveling environment such as intersection, cross-walk, and sidewalk)
- Angular dynamics (angle between ground and vehicle body)
- Device usage (device usage situation)
- Other information (other information)

As described above, a message in the second embodiment includes at least one of a position, a traveling direction, a traveling speed, a traveling lane position, an acceleration, a traveling environment, and an angle between the ground and a vehicle body of the movable apparatus. Such information is generated by the message generation unit 112 of the information processing device 100 based on detected values from various sensors such as an IMU provided in the information processing device 100.

On the other hand, Low Frequency Container 650 which is a data storage portion is a set of information to be delivered to the neighborhood at a low frequency compared to High Frequency Container 640. For example, the following information denoted by reference numeral 655 of Fig. 6 is included. Here, all the following information is not essential and delivery or non-delivery may be selected in accordance with a situation.
- Lights (light state of illumination mounted on vehicle body)
- Sub-profile (detained information of type of two-wheeled vehicle 250)
- Size Class (class of vehicle body size of two-wheeled vehicle 250)

For fixed value data information such as a class or the like of the vehicle body size, a preset value may be stored in a ROM or a RAM (not illustrated) of the information processing device 100 and may be described when the message generation unit 112 of the information processing device 100 generates a message.

In step S305, when the message is transmitted with the format of the VAM, the value of ITS-S Type (Profile) included in Basic Container 630 is appropriately changed. Alternatively, the value of Sub-profile included in Low Frequency Container 650 is appropriately changed and a message is generated.

That is, when a message is generated as "two-wheeled vehicle" in step S303, ITS-S Type which is data indicating a type is assumed to be Bicyclist (a person riding a bicycle) or Motorcyclist (a person riding a motorcycle).

Conversely, when a message is generated as "pedestrian" in step S304, ITS-S Type which is data indicating a type is assumed to be Pedestrian (a pedestrian). A value of Sub-profile included in Low Frequency Container 650 is also a value in accordance with the type.

Table 1 shows a structure of Profile and Sub-profile defined in the format of the VAM (quoted from ETSI TS 103 300-3 V2.1.1 (2020-11)).

In this way, the message with the format of the VAM used in the second embodiment includes a profile for differentiating at least a pedestrian from various types of movable apparatuses and a sub-profile for further classifying the profile. When a riding state (the first state) and a push-walking state (the second state) of the two-wheeled vehicle are expressed with a change in Profile, the value of Profile is changed to Pedestrian and Bicyclist/Motorcyclist in accordance with a situation.

**[Table 1]**

| **Profile (ITS-S Type)** | **Profile Index** | **SubProfile Index** | **VruSubProfile description** |
|---|---|---|---|
| Pedestrian | 1 | 0 | Unavailable |
| | | 1 | Ordinary Pedestr i an |
| | | 2 | Road workers |
| | | 3 | First responder |
| Bicyclist | 2 | 0 | Unavailable |
| | | 1 | Bicyclist |
| | | 2 | Wheelchair User |
| | | 3 | Horse and rider |
| | | 4 | Rollerskater |
| | | 5 | Standing E-Scooter |
| | | 6 | Personal Transporter |
| | | 7 | E-Bicyclist (Pedelec), up to 25 km/h in Europe |
| | | 8 | E-Bicyclist (Speed-Pedelec), up to 45 km/h but with a |
| | | | motion dynamic similar to a bicycle |
| Motorcyclist | 3 | 0 | Unavailable |
| | | 1 | Moped |
| | | 2 | Motorcycle |
| | | 3 | Motorcycle + Sidecar right |
| | | 4 | Motorcycle + Sidecar left |
| | | 5 | Seated E-scooter |
| Animals | 4 | 0 | Unavailable |
| | | 1 | Wild animal |
| | | 2 | Farm animal |
| | | 3 | Service animal |

### Third Embodiment

However, despite the change in the value of Profile to Pedestrian (a pedestrian), a person walking and pushing a two-wheeled vehicle on foot may be not differentiated from a general pedestrian from the viewpoint of a terminal receiving the VAM, and thus an application for which the differentiation is necessary cannot be implemented.

Examples of the application for which the differentiation is necessary include a use case where a certain value can be expected by differentiating a person walking and pushing a two-wheeled vehicle on foot from a general pedestrian as in a monitoring system of a bicycle parking lot. By notifying the neighborhood in advance that a person is walking and pushing a two-wheeled vehicle on foot, the fact that a presence which can be in a traveling state of a bicycle is located nearby can appeal to the neighborhood in advance. Therefore, it is possible to reduce an accident.

In this way, to clearly differentiate a person walking and pushing a two-wheeled vehicle on foot from a general pedestrian, Sub-Profile extends in the third embodiment.

Tables 2 and 3 are tables when Sub-Profile extends. Table 2 shows an example in which a state indicating a person who is walking and pushing the bicycle on foot is added to Sub-Profile of each of Bicyclist and Motorcyclist profiles. That is, in Table 2 in the case of the second state, a message in which information indicating a rider (Bicyclist and Motorcyclist) of a movable apparatus is stored in the profile and information indicating the second state (a push-walking state) is stored in the sub-profile is generated.

On the other hand, Table 3 shows an example in which a state indicating a person walking and pushing the bicycle on foot is added to Sub-Profile of a Pedestrian profile. That is, in Table 3, in the case of the second state, a message in which information indicating a pedestrian is stored in the profile and information indicating the second state (a push-walking state) is stored in the sub-profile is generated.

In the third embodiment, when a message is generated as "pedestrian" in step S304, the message generation unit 112 uses the extended Sub-Profile, as shown in Table 2 and the extended Profile, as shown in Table 3. Accordingly, a message including information indicating that the operator is in the first state in which the operator is riding the two-wheeled vehicle or in the second state in which the operator is walking and pushing the bicycle on foot is generated.

**[Table 2]**

| **Profile (ITS-S Type)** | **Profile Index** | **SubProfile Index** | **VruSubProfile description** |
|---|---|---|---|
| Pedestrian | 1 | 0 | Unavailable |
| | | 1 | Ordinary Pedestrian |
| | | 2 | Road workers |
| | | 3 | First responder |
| Bicycl ist | 2 | 0 | Unavailable |
| | | 1 | Bicycl ist |
| | | 2 | Wheelchair User |
| | | 3 | Horse and rider |
| | | 4 | Rollerskater |
| | | 5 | Standing E-Scooter |
| | | 6 | Personal Transporter |
| | | 7 | E-Bicyclist (Pedelec), up to 25 km/h in Europe |
| | | 8 | E-Bicyclist (Speed-Pedelec), up to 45 km/h but with a |
| | | | motion dynamic similar to a bicycle |
| | | **9** | **A person walking and pushing the bicycle on foot** |
| Motorcyclist | 3 | 0 | Unavailable |
| | | 1 | Moped |
| | | 2 | Motorcycle |
| | | 3 | Motorcycle + Sidecar right |
| | | 4 | Motorcycle + Sidecar left |
| | | 5 | Seated E-scooter |
| | | **6** | **A person walking and pushing the motorcycle on foot** |
| Animals | 4 | 0 | Unavailable |
| | | 1 | Wild animal |
| | | 2 | Farm animal |
| | | 3 | Service animal |

**[Table 3]**

| **Profile (ITS-S Type)** | **Profile Index** | **SubProfi le Index** | **VruSubProfile description** |
|---|---|---|---|
| Pedestrian | 1 | 0 | Unavailable |
| | | 1 | Ordinary Pedestr i an |
| | | 2 | Road workers |
| | | 3 | First responder |
| | | **4** | **A person walking and pushing the bicycle/motorcycle on foot** |
| Bicyclist | 2 | 0 | Unavailable |
| | | 1 | Bicyclist |
| | | 2 | Wheelchair User |
| | | 3 | Horse and rider |
| | | 4 | Rollerskater |
| | | 5 | Standing E-Scooter |
| | | 6 | Personal Transporter |
| | | 7 | E-Bicyclist (Pedelec), up to 25 km/h in Europe |
| | | 8 | E-Bicyclist (Speed-Pedelec), up to 45 km/h but with a |
| | | | motion dynamic similar to a bicycle |
| Motorcyclist | 3 | 0 | Unavailable |
| | | 1 | Moped |
| | | 2 | Motorcycle |
| | | 3 | Motorcycle + Sidecar right |
| | | 4 | Motorcycle + Sidecar left |
| | | 5 | Seated E-scooter |
| Animals | 4 | 0 | Unavailable |
| | | 1 | Wild animal |
| | | 2 | Farm animal |
| | | 3 | Service animal |

Finally, in step S305, the information processing device 100 delivers the message generated in step S304 to the communication unit 210 of the neighboring external terminal 200 through the communication unit 150 of the two-wheeled vehicle 250.

As a communication protocol, for example, a message queuing telemetry transport (MQTT), a real time publish subscribe (RTPS), or the like may be adopted. The communication protocol is not limited thereto and another protocol may be adopted.

As described above, according to the first to third embodiments, it is automatically determined whether the operator is in the first state where the operator is riding the two-wheeled vehicle or the second state where the operator is walking and pushing the two-wheeled vehicle on foot. Then, it is possible to provide a device notifying an external device of information appropriate in accordance with a determination result. Accordingly, it is possible to reduce erroneous notification or the like of a warning unnecessary for neighboring devices.

In the foregoing embodiments, the example in which the device is mounted on a bicycle or a motorcycle particularly as a movable apparatus has been described, but another use case may be applied. For example, the movable apparatus includes one of an electric wheelchair, a kickboard, an electric kickboard, s segway, a personal transporter, a roller skate, and a moped.

In the foregoing embodiments, the example in which the information processing device 100 is mounted on a vehicle such as a two-wheeled vehicle has been described, but a smartphone or a wearable device in which application software is embedded may be used rather than a dedicated device.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the communication device through a network or various storage media. Then, a computer (or a CPU, an MPU, or the like) of the communication device may be configured to read and execute the program. In such a case, the program and the storage medium storing the program configure the present invention.

This application claims the benefit of Japanese Patent Application No. 2022-084426, filed on May 24, 2022, which is hereby incorporated by reference herein in its entirety.

A communication device capable of communicating with an external device in accordance with states of an operator and a movable apparatus includes: a riding determination unit configured to determine whether an operator is riding a movable apparatus; and a communication unit configured to transmit a message including attribute information indicating the movable apparatus to another device when the riding determination unit determines that the operator is in a first state in which the operator is riding the movable apparatus, and to transmit a message including attribute information indicating a pedestrian to the other device when the riding determination unit determines that the operator is in a second state in which the operator is not riding the movable apparatus and is operating the movable apparatus.

## Claims

1. A communication device comprising at least one processor or circuit configured to function as:
a riding determination unit configured to determine whether an operator is riding a movable apparatus; and
a communication unit configured to transmit a message including attribute information indicating the movable apparatus to another device when the riding determination unit determines that the operator is in a first state in which the operator is riding the movable apparatus, and to transmit a message including attribute information indicating a pedestrian to the other device when the riding determination unit determines that the operator is in a second state in which the operator is not riding the movable apparatus and is operating the movable apparatus.

2. The communication device according to claim 1, wherein the movable apparatus includes one of a bicycle, a motorcycle, a wheelchair, an electric wheelchair, a kickboard, an electric kickboard, s segway, a personal transporter, a roller skate, or a moped.

3. The communication device according to claim 1, wherein, based on an acceleration or a speed of the movable apparatus, the riding determination unit determines whether the operator is in the first state or the second state.

4. The communication device according to claim 3, wherein the riding determination unit determines that the operator is in the first state when a speed of the movable apparatus is equal to or greater than a predetermined value.

5. The communication device according to claim 3, wherein, based on an analysis result of the acceleration of the movable apparatus, the riding determination unit determines whether the operator is in the second state.

6. The communication device according to claim 3, wherein the riding determination unit determines that the operator is in the first state when a weight value acquired from a gravimetric sensor provided in the movable apparatus is equal to or greater than a predetermined threshold.

7. The communication device according to claim 1, wherein, based on a position of a face region or a body region of the operator imaged by an imaging unit, the riding determination unit determines whether the operator is in the first state or the second state.

8. The communication device according to claim 1, wherein, in accordance with information regarding a driving state of the movable apparatus received from the movable apparatus, the riding determination unit determines whether the operator is in the first state or the second state.

9. The communication device according to claim 1, wherein the message includes at least one of a position, a traveling direction, a traveling speed, a traveling lane position, an acceleration, and a traveling environment of the movable apparatus, and an angle between the ground and a movable apparatus body.

10. The communication device according to claim 1,
wherein the message includes a profile for differentiating at least a pedestrian from a rider of movable apparatuses and a sub-profile for further classifying the profile, and
wherein, in a case of the second state, a message in which information indicating a rider of the movable apparatus is stored in the profile and information indicating the second state is stored in the sub-profile is generated.

11. The communication device according to claim 1,
wherein the message includes a profile for differentiating at least a pedestrian from a rider of movable apparatuses and a sub-profile for further classifying the profile, and
wherein, in a case of the second state, a message in which information indicating a pedestrian is stored in the profile and information indicating the second state is stored in the sub-profile is generated.

12. The communication device according to claim 1, wherein the communication unit transmits the message with an ETSI VAM format.

13. A communication control method comprising:
determining whether an operator is riding a movable apparatus; and
transmitting a message including attribute information indicating the movable apparatus to another device when it is determined in the determining that the operator is in a first state in which the operator is riding the movable apparatus, and transmitting a message including attribute information indicating a pedestrian to the other device when it is determined that the operator is in a second state in which the operator is not riding the movable apparatus and is operating the movable apparatus.

14. A non-transitory computer-readable storage medium storing a computer program including instructions for executing following processes comprising:
determining whether an operator is riding a movable apparatus; and
transmitting a message including attribute information indicating the movable apparatus to another device when it is determined in the determining that the operator is in a first state in which the operator is riding the movable apparatus, and transmitting a message including attribute information indicating a pedestrian to the other device when it is determined that the operator is in a second state in which the operator is not riding the movable apparatus and is operating the movable apparatus.
